# FASCICULE DE BREVET EUROPEEN

(11) **EP 0 791 514 B1**
(45) Date de publication et mention de la délivrance du brevet: **13.06.2001**
(21) Numéro de dépôt: 97101276.0
(22) Date de dépôt: 28.01.1997
(51) Int. Cl.: B60S 1/38

(54) **Essuie-glace de véhicule automobile muni d'un capot d'habillage comportant un tronçon d'extrémité**
Scheibenwischer für Kraftfahrzeuge mit Verkleidung für Endstück
Windscreen wiper for vehicles with cover for endpiece

(30) Priorité: 16.02.1996 FR 9601956
(43) Date de publication de la demande: 27.08.1997
(73) Titulaire: PAUL JOURNEE S.A., F-60240 Reilly (FR)
(72) Inventeur: Journée, Maurice, 60240 Reilly (FR)
(74) Mandataire: Kohn, Philippe

(56) Documents cités:
- EP-A- 0 538 093
- EP-A- 0 606 846
- FR-A- 2 676 694
- US-A- 4 959 882
- US-A- 5 412 177

## Description

L'invention concerne un essuie-glace de véhicule automobile muni d'un capot d'habillage comportant un tronçon d'extrémité articulé.

L'invention concerne plus particulièrement un essuie-glace de véhicule automobile, du type dans lequel un balai d'essuie-glace est monté à rotation, autour d'un axe transversal, à l'extrémité longitudinale libre d'un bras d'essuie-glace, du type dans lequel le balai d'essuie glace comporte une structure articulée qui est déformable dans un plan longitudinal sensiblement perpendiculaire à une vitre à essuyer et qui plaque une raclette d'essuyage souple contre la vitre de manière que la raclette en épouse le galbe, du type dans lequel la structure articulée comporte un étrier principal à une extrémité duquel est articulé au moins un palonnier, et du type dans lequel il est prévu un capot d'habillage qui recouvre le balai et qui présente à cet effet, en section transversale, une forme de U renversé formée par deux flancs latéraux parallèles réunis par un dos supérieur transversal,

II est particulièrement intéressant de munir le balai d'essuie-glace d'un capot d'habillage car cela permet de l'intégrer plus facilement dans l'esthétique générale du véhicule grâce à une forme apurée par rapport à celle du balai.

Par ailleurs, un capot d'habillage recouvrant l'intégralité du balai présente l'avantage de pouvoir supporter divers accessoires tels qu'un déflecteur aérodynamique ou tel qu'un dispositif d'arrosage de la vitre à essuyer.

Un tel type d'essuie-glace est par exemple décrit et représenté dans le document EP-A-0.538.093.

Toutefois, le capot d'habillage est une pièce rigide, et il ne peut donc pas s'adapter au galbe de la vitre à essuyer lorsque l'essuie-glace balaie la vitre alors que la raclette en matériau souple qui est portée par le balai est susceptible de se déformer dans un plan perpendiculaire au pare-brise pour suivre la courbure de la vitre.

Ainsi, il est nécessaire de prévoir une distance minimale entre les bords inférieurs des flancs du capot et la surface de la vitre, notamment dans la partie centrale de la vitre pour éviter que le capot ne frotte contre la vitre.

Au contraire, l'extrémité longitudinale du balai, qui balaie les parties périphériques de la vitre qui présentent généralement la plus grande courbure, tend à « sortir » du logement délimité par le capot d'habillage, et l'extrémité longitudinale correspondante du capot peut se retrouver alors décollée de plusieurs centimètres de la surface de la vitre, ce qui est particulièrement inesthétique.

Dans le but d'apporter une solution à ces problèmes, l'invention propose un essuie-glace du type décrit précédemment, caractérisé en ce que le capot d'habillage comporte un tronçon longitudinal principal et comporte au moins un tronçon longitudinal d'extrémité qui est monté pivotant, autour d'un axe transversal, sur le tronçon principal pour que le tronçon longitudinal d'extrémité du capot suive fidèlement les pivotements du palonnier lorsque l'essuie-glace balaye la vitre à essuyer.

Selon divers modes de réalisation de l'invention :
- le tronçon longitudinal d'extrémité comporte une extrémité longitudinale de liaison dont deux flasques latéraux parallèles sont destinés à être reçus entre les deux flancs parallèles d'une extrémité de liaison du tronçon principal, et les flasques de l'extrémité de liaison du tronçon d'extrémité comportent deux ergots transversaux qui sont dirigés vers l'extérieur et qui sont destinés à être reçus dans des orifices correspondants formés dans les flancs du tronçon principal pour former le pivot d'articulation du tronçon d'extrémité sur le tronçon principal ;
- l'axe de pivotement du tronçon d'extrémité sur le tronçon principal correspond sensiblement à l'axe d'articulation du palonnier sur l'étrier ;
- le tronçon d'extrémité du capot d'habillage est solidaire du palonnier ;
- le tronçon d'extrémité du capot d'habillage est monté sur le palonnier par emboîtement élastique ;
- le palonnier porte, à une extrémité longitudinale, un palonnier secondaire monté articulé, et le capot d'habillage comporte deux tronçons pivotants successifs dont les axes de pivotement correspondent aux axes d'articulation respectivement du palonnier et du palonnier secondaire ;
- l'un des flancs latéraux du capot d'habillage porte, sur un bord longitudinal inférieur, une rampe d'arrosage destinée à projeter du liquide de lavage sur la vitre ;
- la rampe d'arrosage s'étend le long du tronçon principal ;
- la rampe d'arrosage est réalisée en matériau souple et elle s'étend le long du tronçon principal et d'un tronçon d'extrémité pivotant ;
- l'un des flancs latéraux du capot d'habillage porte un déflecteur aérodynamique ;
- la rampe d'arrosage est portée par le flanc latéral opposé à celui portant le déflecteur aérodynamique ; et
- le capot d'habillage comporte une série d'ouïes d'évacuation de l'air emprisonné sous le capot.

D'autres caractéristiques et avantages de l'invention apparaîtront à la lecture de la description détaillée qui suit pour la compréhension de laquelle on se reportera aux dessins
- la figure 1 est une vue en perspective éclatée d'un balai d'essuie-glace muni d'un capot d'habillage conforme aux enseignements de l'invention ;

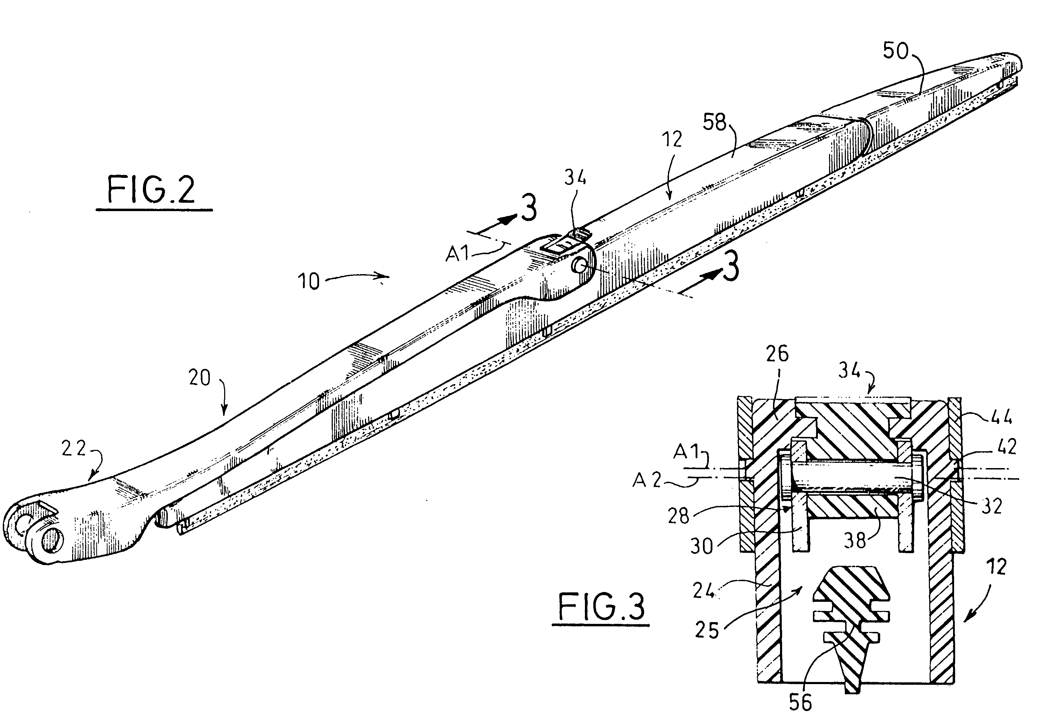

- la figure 2 est une vue similaire à celle de la figure 1 dans laquelle l'essuie-glace est représenté assemblé ;
- la figure 3 est une vue en coupe transversale représentant les moyens d'assemblage du balai sur le capot et du capot sur le bras suivant la ligne 3-3 de la figure 2;
- la figure 4 est une vue en perspective éclatée des moyens d'assemblage pivotant du tronçon d'extrémité sur le tronçon principal ;
- la figure 5 est une vue en section transversale représentant les moyens d'assemblage pivotant du tronçon d'extrémité sur le tronçon principal ;
- la figure 6 est une vue en section transversale représentant une variante de réalisation de l'invention dans lequel le capot d'habillage comporte un flanc latéral formant un déflecteur aérodynamique ; et
- la figure 7 est une vue similaire à celle de la figure 5 représentant une variante de réalisation de l'invention dans laquelle le capot d'habillage porte une rampe d'arrosage.

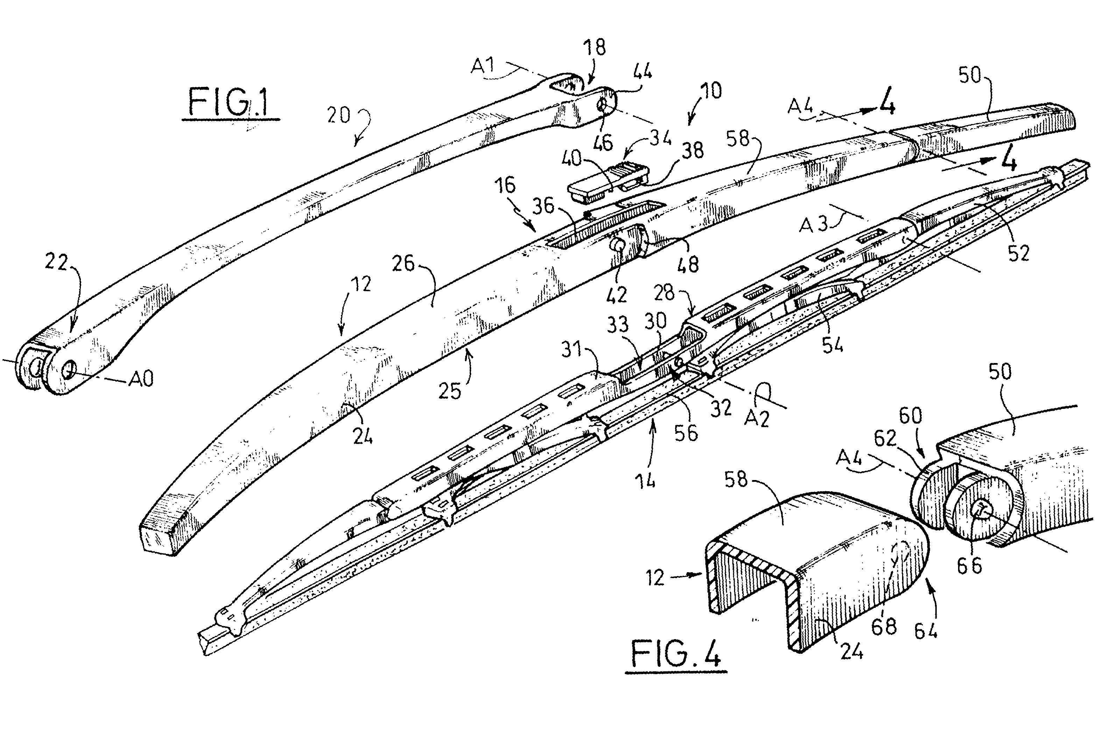

On a représenté sur la figure 1 un essuie-glace 10 de véhicule automobile comportant un capot 12 d'habillage d'un balai d'essuie-glace 14 dont une portion centrale 16 forme un connecteur permettant le montage à rotation, autour d'un axe transversal A1, du balai 14 à l'extrémité longitudinale avant 18 d'un bras d'essuie-glace 20.

Le bras d'essuie-glace 20 comporte une extrémité longitudinale arrière 22 par laquelle il est monté à rotation, autour d'un axe transversal A0, sur une tête d'entraînement (non représentée) en balayage alterné.

Le capot d'habillage 12 présente, en section transversale, une forme de U renversé de manière à former un logement 25 délimité transversalement par deux flancs latéraux longitudinaux 24, et délimité vers le haut par un dos supérieur transversal 26 qui relie les deux flancs 24.

Le balai 14 est ainsi susceptible d'être reçu à l'intérieur du logement 25 délimité par le capot 12 de manière à être masqué sur toute sa longueur et sur quasiment toute sa hauteur.

Sa partie centrale 16 du capot fait office de connecteur permettant le montage à rotation du balai 14 sur le bras 20.

Un tel type de connecteur a été décrit et représenté dans le document No. FR-A-2.700.309.

La partie centrale 16 du capot 12 est destinée à chevaucher une partie centrale d'un étrier principal 28 du balai 14 qui présente, en section transversale, une forme de U renversé formée par deux ailes longitudinales parallèles 30 réunies par un dos supérieur 31.

Dans la partie centrale de l'étrier principal 28, on a formé une ouverture longitudinale 33 par découpe du dos supérieur 21 et d'une portion supérieure de chacune des deux ailes 30 qui sont par ailleurs reliées entre elles par une tige transversale 32, d'axe transversal A2, agencée dans l'ouverture 33.

Un organe de verrouillage 34 est monté coulissant longitudinalement dans une lumière longitudinale rectangulaire 36 formée dans le dos supérieur 26 de la partie centrale 16 du capot 12.

L'organe de verrouillage 34 comporte un crochet 38 qui est formé sur une face inférieure 40 et qui présente une forme d'épingle à cheveu ouverte longitudinalement vers l'arrière.

L'organe de verrouillage 34 est destiné à coulisser longitudinalement dans la lumière 36 entre une première position avancée de montage dans laquelle le verrou est agencé longitudinalement en avant de la tige transversale 32 de manière que, lorsque le balai 14 est introduit verticalement du bas vers le haut dans le logement délimité par le capot 12, la tige transversale 32 du balai 14 se présente en regard de l'extrémité ouverte du crochet de verrouillage 38 en épingle à cheveu.

Lorsque l'organe de verrouillage 34 est déplacé longitudinalement vers l'arrière vers une seconde position de verrouillage, la tige transversale du balai 14 est reçue au fond du crochet 38, ce qui permet de solidariser le capot 12 et le balai 14.

Il est prévu par ailleurs des moyens (non représentés) qui permettent de bloquer axialement le capot 12 par rapport au balai 14, par exemple par coopération avec des bords transversaux de l'ouverture 33 de l'étrier principal 28.

Pour permettre le montage à rotation du capot 12 sur l'extrémité longitudinale avant 18 du bras 20, la partie centrale 16 du capot 12 comporte, sur chacun de ses flancs 24, un plot transversal 42 qui s'étend vers l'extérieur.

L'extrémité longitudinale avant 18 du bras 20 est en forme de chape et comporte deux flasques longitudinaux parallèles 44 entre lesquels est reçue la partie centrale 16 du capot 12. Les flasques 44 du bras 20 sont munis chacun d'un perçage cylindrique 46 d'axe A1 dans lesquels sont reçus les plots transversaux 42 du capot 12.

Afin d'améliorer l'intégration esthétique du capot 12 et du bras 20, les flancs latéraux 24 du capot 12 sont munis chacun d'un décrochement transversal 48 qui est agencé en avant du plot transversal 42 correspondant, et qui délimite une partie avant du capot 12 de même largeur transversale que les flasques 44 de l'extrémité 18 du bras 20.

De manière connue, un cavalier (non représenté) peut être interposé entre le bras 20 et la partie centrale 16 du capot 12. Un tel cavalier comporte notamment des douilles interposées entre les plots 42 du capot 12 et les perçages 46 du bras 20 pour éviter une usure prématurée des plots 42.

Conformément aux enseignements de l'invention, le capot d'habillage 12 est muni d'un tronçon d'extrémité 50 pivotant.

En effet, le balai d'essuie-glace 14 comporte généralement au moins un palonnier 52 monté articulé, autour d'un axe transversal A3, à l'une des extrémités longitudinales de l'étrier principal 28.

Ce palonnier 52 porte une raclette d'essuyage souple 56 soit directement, soit par l'intermédiaire d'un palonnier secondaire 54 également monté articulé à l'une de ses extrémités.

L'étrier principal 28, le palonnier 52 et le palonnier secondaire 54 forment ainsi une structure articulée qui est déformable dans un plan longitudinal sensiblement perpendiculaire au plan de la vitre à essuyer et qui permet de plaquer, sur toute sa longueur, la raclette 56 contre la vitre de manière à en suivre le galbe.

Or, le galbe de la vitre est généralement le plus prononcé au niveau de ses bords périphériques qui sont destinés à être essuyés par l'extrémité longitudinale avant du balai.

De la sorte, le palonnier 52 qui est agencé à l'extrémité longitudinale avant de l'étrier 28 est susceptible de pivoter d'un angle important autour de son axe d'articulation A3 par rapport à l'étrier principal.

Il apparaît donc intéressant de prévoir que le tronçon d'extrémité 50 du capot 12 qui recouvre le palonnier 52 puisse pivoter par rapport à un tronçon principal 58 du capot 12, fixe par rapport à l'étrier principal 28.

Pour son montage pivotant, le tronçon d'extrémité 50 comporte une extrémité de liaison 60 en forme de chape munie de deux flasques longitudinaux parallèles 62 qui sont destinés à être reçus entre les deux flancs latéraux 24 d'une extrémité de liaison 64 du tronçon principal 58.

Les flasques 62 portent des ergots transversaux 66 dirigés vers l'extérieur, qui sont destinés à être reçus chacun dans un logement cylindrique borgne 68 correspondant formé dans la face interne de chacun des flancs 24 du tronçon principal 58.

Pour le montage du tronçon d'extrémité 50, il suffit de pincer transversalement les deux flasques 62 du tronçon d'extrémité 50 l'un vers l'autre en déformant élastiquement le tronçon 50 pour engager les deux ergots transversaux 66 entre les deux flancs 24 du tronçon principal 58 jusqu'à ce qu'ils soient en regard des logements 68 correspondants. Les flasques 62 s'écartent alors transversalement pour reprendre leur forme initiale et les ergots transversaux 66 sont reçus dans les logements cylindriques 68 de manière à former un pivot d'articulation pour le tronçon d'extrémité 50.

Bien entendu, il est préférable que, lorsque le capot 12 est monté sur le balai 14, l'axe A4 du pivot d'articulation du tronçon d'extrémité 50 corresponde à l'axe A3 d'articulation du palonnier 52 sur l'étrier principal 28 du balai 14. On peut alors prévoir d'emboîter élastiquement le tronçon d'extrémité 50 sur le palonnier 52 de manière que le tronçon d'extrémité 50 du capot suive fidèlement les pivotements du palonnier 52 lorsque l'essuie-glace 10 balaye la vitre à essuyer.

On peut aussi prévoir que, dans le cas (non représenté) où l'extrémité longitudinale avant du palonnier 52 porte un palonnier secondaire 54, le tronçon d'extrémité 50 soit lui-même réalisé en deux tronçons successifs, montés pivotants l'un par rapport à l'autre.

Les flancs latéraux 24, respectivement du tronçon principal 58 et du tronçon d'extrémité 50, présentent au niveau des extrémités de liaison, respectivement 64, 60, une découpe en arc de cercle centrée sur l'axe A4 de manière à ne pas empêcher le pivotement relatif des deux tronçons 50, 58.

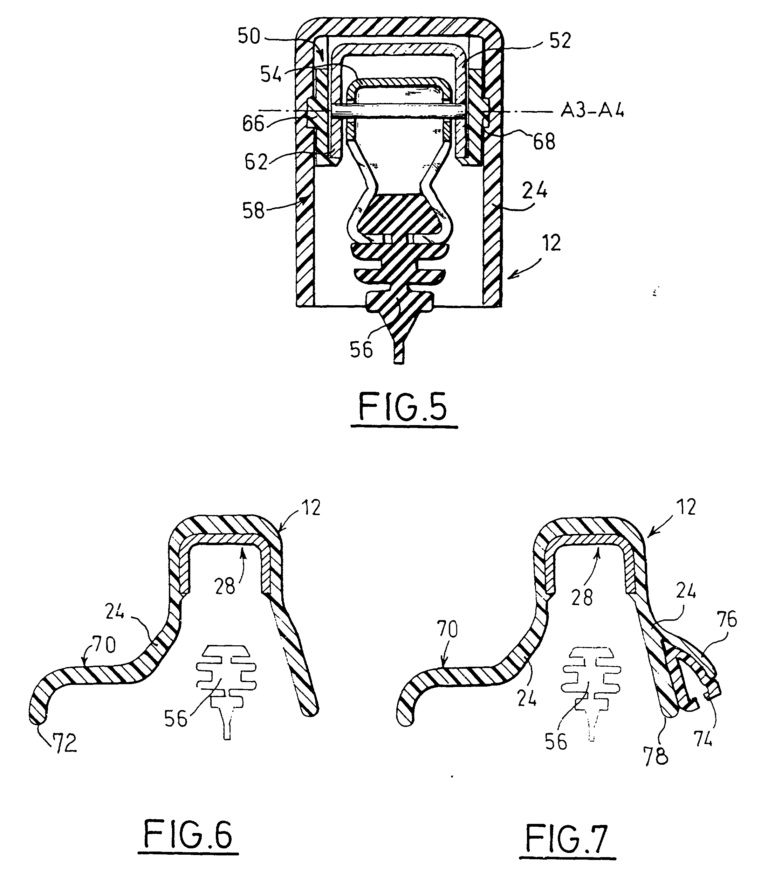

On a représenté sur la figure 6 une variante de réalisation de l'invention dans laquelle l'un des flancs 24 du capot d'habillage 12 est profilé de manière à former un déflecteur aérodynamique 70 permettant de lutter contre la tendance au décollement du balai lorsque le véhicule roule à grande vitesse.

Le flanc 24 qui forme le déflecteur 70 doit être celui qui est disposé en amont dans le flux d'air circulant autour du véhicule.

On peut prévoir de munir le bord inférieur 72 du flanc 24 formant déflecteur d'une lèvre souple permettant d'amortir un éventuel choc du capot 12 contre la surface du pare-brise.

Dans la variante de réalisation qui est représentée sur la figure 7, un des flancs 24 du capot d'habillage 12 porte une rampe d'arrosage 74 destinée à projeter du liquide de lavage contre la vitre à essuyer.

Dans ce cas, la rampe d'arrosage 74 peut ne s'étendre que sur la longueur du tronçon principal 58 du capot 12 pour éviter de perturber le pivotement du tronçon d'extrémité 50.

La rampe d'arrosage 74 peut être réalisée venue de matière avec le capot 12, sous la forme d'un canal interne formé dans un bord inférieur du flanc 24 et comportant des orifices de projection tournés vers la vitre à essuyer ou, ainsi que cela est représenté sur la figure 7, sous la forme d'une pièce indépendante reçue dans un logement 76 qui est formé sur le bord inférieur 78 du flanc 24 et qui est ouvert en direction de la vitre à essuyer.

Dans l'exemple de réalisation qui est représenté sur la figure 7, le capot 12 comporte un flanc 24 qui forme un déflecteur aérodynamique 70 tandis que le flanc 24 opposé porte la rampe d'arrosage 74.

Enfin, il peut être nécessaire de prévoir un moyen d'évacuer l'air susceptible de s'engouffrer à l'intérieur du capot lorsque le véhicule roule à grande vitesse pour éviter que cet air ne provoque le soulèvement de l'essuie-glace.

Aussi, on peut par exemple prévoir de percer des ouïes (non représentées) dans le dos supérieur 26 du capot 12 de manière à permettre à l'air de s'échapper. Ces ouïes peuvent être avantageusement aménagées dans une portion du capot située en arrière de sa portion centrale 16 de manière que les ouïes soient au moins en partie masquées par le bras d'essuie-glace 20 qui recouvre cette portion du capot.

L'invention a été décrite ci-dessus dans le cadre d'un essuie-glace comportant un capot d'habillage réalisé venu de matière avec le connecteur d'articulation du balai sur le bras mais il est possible d'appliquer les enseignements de l'invention à la conception d'un capot directement fixé sur le balai, le balai étant par ailleurs fixé de manière conventionnelle sur un bras dont l'extrémité en forme de crochet est destinée à recevoir un connecteur monté pivotant sur la tige transversale du balai.

## Revendications

1. Essuie-glace de véhicule automobile, du type dans lequel un balai d'essuie-glace (14) est monté à rotation, autour d'un axe transversal (A1), à l'extrémité longitudinale avant (18) d'un bras d'essuie-glace (20), du type dans lequel le balai d'essuie-glace (14) comporte une structure articulée qui est déformable dans un plan longitudinal sensiblement perpendiculaire à une vitre à essuyer et qui plaque une raclette d'essuyage (56) souple contre la vitre de manière que la raclette (56) en épouse le galbe, du type dans lequel la structure articulée comporte un étrier principal (28) à une extrémité duquel est articulé au moins un palonnier (52), et du type dans lequel il est prévu un capot d'habillage (12) qui recouvre le balai (14) et qui présente à cet effet, en section transversale, une forme de U renversé formée par deux flancs (24) latéraux parallèles réunis par un dos supérieur transversal (26), caractérisé en ce que le capot d'habillage (12) comporte un tronçon longitudinal principal (58) et au moins un tronçon longitudinal d'extrémité (50) qui est monté pivotant, autour d'un axe transversal (A4) sur le tronçon principal (58) pour que le tronçon longitudinal d'extrémité (50) du capot (12) suive fidèlement les pivotements du palonnier (52) lorsque l'essuie-glace (10) balaye la vitre à essuyer.

2. Essuie-glace selon la revendication 1, caractérisé en ce que le tronçon longitudinal d'extrémité (50) comporte une extrémité longitudinale de liaison (64) dont deux flasques latéraux parallèles (62) sont destinés à être reçus entre les deux flancs parallèles (24) d'une extrémité de liaison (60) du tronçon principal (58), et en ce que les flasques (62) de l'extrémité de liaison (60) du tronçon d'extrémité (50) comportent deux ergots transversaux (66) qui sont dirigés vers l'extérieur et qui sont destinés à être reçus dans des orifices (68) correspondants formés dans les flancs (24) du tronçon principal (58) pour former le pivot d'articulation du tronçon d'extrémité (50) sur le tronçon principal (58).

3. Essuie-glace selon l'une des revendications 1 ou 2, caractérisé en ce que l'axe de pivotement (A4) du tronçon d'extrémité (50) sur le tronçon principal (58) correspond sensiblement à l'axe d'articulation (A3) du palonnier (52) sur l'étrier (28).

4. Essuie-glace selon l'une quelconque des revendications précédentes, caractérisé en ce que le tronçon d'extrémité (50) du capot d'habillage (12) est solidaire du palonnier (52).

5. Essuie-glace selon l'une quelconque des revendications précédentes, caractérisé en ce que le tronçon d'extrémité (50) du capot d'habillage (12) est monté sur le palonnier (52) par emboîtement élastique.

6. Essuie-glace selon l'une quelconque des revendications précédentes, caractérisé en ce que le palonnier (52) porte, à une extrémité longitudinale, un palonnier secondaire (54) monté articulé, et en ce que le capot d'habillage (12) comporte deux tronçons pivotants successifs dont les axes de pivotement correspondent aux axes d'articulation respectivement du palonnier et du palonnier secondaire.

7. Essuie-glace selon l'une quelconque des revendications précédentes, caractérisé en ce que l'un des flancs latéraux (24) du capot d'habillage (12) porte, sur un bord longitudinal inférieur, une rampe d'arrosage (74) destinée à projeter du liquide de lavage sur la vitre.

8. Essuie-glace selon la revendication 7, caractérisé en ce que la rampe d'arrosage (74) s'étend le long du tronçon principal (58).

9. Essuie-glace selon la revendication 7, caractérisé en ce que la rampe d'arrosage (74) est réalisée en matériau souple et en ce qu'elle s'étend le long du tronçon principal (58) et d'un tronçon d'extrémité pivotant (50).

10. Essuie-glace selon l'une quelconque des revendications précédentes, caractérisé en ce que l'un des flancs latéraux (24) du capot d'habillage (12) porte un déflecteur aérodynamique (70).

11. Essuie-glace selon la revendication 10 prise en combinaison avec l'une quelconque des revendications 7 à 9, caractérisé en ce que la rampe d'arrosage (74) est portée par le flanc latéral (24) opposé à celui portant le déflecteur aérodynamique (70).

12. Essuie-glace selon l'une quelconque des revendications précédentes, caractérisé en ce que le capot d'habillage (12) comporte une série d'ouïes d'évacuation de l'air emprisonné sous le capot.

## Patentansprüche

1. Kraftfahrzeugscheibenwischer, bei dem ein Scheibenwischerblatt (14) drehbar um eine Querachse (A1) an dem freien Längsende (18) eines Scheibenwischerarms (20) angebracht ist, bei dem das Scheibenwischerblatt (14) eine Gelenkstruktur umfaßt, die in einer zu einer zu wischenden Scheibe in etwa senkrechten Längsebene verformbar ist und die einen biegsamen Wischergummi (56) an die Scheibe andrückt, so daß sich der Wischergummi (56) an deren Wölbung anpaßt, wobei die Gelenkstruktur einen Hauptbügel (28) umfaßt, an dessen einem Ende wenigstens ein Krallenbügel (52) angelenkt ist, und wobei eine Abdeckkappe (12) vorgesehen ist, die das Wischerblatt (14) abdeckt und die dazu im Querschnitt eine umgekehrte U-Form aufweist, die durch zwei parallele Seitenflanken (24) gebildet wird, die durch einen oberen Querrücken (26) verbunden sind, **dadurch gekennzeichnet**, daß die Abdeckkappe (12) ein Längshauptstück (58) und wenigstens ein Längsendstück (50) umfaßt, das schwenkbar um eine Querachse (A4) am Hauptstück (58) gelagert ist, so daß das Längsendstück (50) der Abdeckkappe (12) den Schwenkbewegungen des Krallenbügels (52) zuverlässig folgt, wenn der Scheibenwischer (10) die zu wischende Scheibe wischt.

2. Scheibenwischer nach Anspruch 1, **dadurch gekennzeichnet,** daß das Längsendstück (50) ein Verbindungslängsende (64) umfaßt, dessen zwei parallele Seitenteile (62) dazu bestimmt sind, zwischen den zwei parallelen Flanken (24) eines Verbindungsendes (60) des Hauptstücks (58) aufgenommen zu werden, und daß die Seitenteile (62) des Verbindungsendes (60) des Endstücks (50) zwei Quernasen (66) umfassen, die nach außen gerichtet sind und die dazu bestimmt sind, in entsprechenden Öffnungen (68) aufgenommen zu werden, die in den Flanken (24) des Hauptstücks (58) ausgebildet sind, um den Gelenkzapfen zur Anlenkung des Endstücks (50) am Hauptstück (58) zu bilden.

3. Scheibenwischer nach einem der Ansprüche 1 oder 2, **dadurch gekennzeichnet**, daß die Schwenkachse (A4) des Endstücks (50) am Hauptstück (58) in etwa der Gelenkachse (A3) für die Anlenkung des Krallenbügels (52) am Hauptbügel (28) entspricht.

4. Scheibenwischer nach einem der vorangehenden Ansprüche, **dadurch gekennzeichnet,** daß das Endstück (50) der Abdeckkappe (12) fest mit dem Krallenbügel (52) verbunden ist.

5. Scheibenwischer nach einem der vorangehenden Ansprüche, **dadurch gekennzeichnet**, daß das Endstück (50) der Abdeckkappe (12) durch elastische Einpassung am Krallenbügel (52) angebracht ist.

6. Scheibenwischer nach einem der vorangehenden Ansprüche, **dadurch gekennzeichnet**, daß der Krallenbügel (52) an einem Längsende einen gelenkig gelagerten Sekundärkrallenbügel (54) trägt und daß die Abdeckkappe (12) zwei hintereinander angeordnete schwenkbare Teilstücke umfaßt, deren Schwenkachsen den Gelenkachsen des Krallenbügels bzw. des Sekundärkrallenbügels entsprechen.

7. Scheibenwischer nach einem der vorangehenden Ansprüche, **dadurch gekennzeichnet,** daß eine der Seitenflanken (24) der Abdeckkappe (12) an einer unteren Längskante eine Sprühvorrichtung (74) trägt, die dazu bestimmt ist, Scheibenwaschflüssigkeit auf die Scheibe aufzusprühen.

8. Scheibenwischer nach Anspruch 7, **dadurch gekennzeichnet**, daß sich die Sprühvorrichtung (74) entlang dem Hauptteilstück (58) erstreckt.

9. Scheibenwischer nach Anspruch 7, **dadurch gekennzeichnet,** daß die Sprühvorrichtung (74) aus einem biegsamen Werkstoff ausgeführt ist und daß sie sich entlang dem Hauptstück (58) und einem schwenkbaren Endstück (50) erstreckt.

10. Scheibenwischer nach einem der vorangehenden Ansprüche, **dadurch gekennzeichnet,** daß eine der Seitenflanken (24) der Abdeckkappe (12) einen aerodynamischen Windabweiser (70) trägt.

11. Scheibenwischer nach Anspruch 10 in Kombination mit einem der Ansprüche 7 bis 9, **dadurch gekennzeichnet**, daß die Sprühvorrichtung (74) an der Seitenflanke (24) angebracht ist, die der den aerodynamischen Windabweiser (70) tragenden Seitenflanke gegenüberliegt.

12. Scheibenwischer nach einem der vorangehenden Ansprüche, **dadurch gekennzeichnet**, daß die Abdeckkappe (12) eine Reihe von Öffnungen für die Ableitung der unter der Abdeckkappe eingeschlossenen Luft enthält.

## Claims

1. Motor-vehicle windscreen wiper of the type in which a windscreen-wiper blade (14) is mounted so as to rotate about a transverse axis (A1) at the front longitudinal end (18) of a windscreen-wiper arm (20), of the type in which the windscreen-wiper blade (14) includes an articulated structure which can be deformed in a longitudinal plane substantially perpendicular to a pane of glass to be wiped and which presses a flexible wiping scraper (56) against the pane of glass in such a way that the scraper (56) matches the curve thereof, of the type in which the articulated structure includes a main stirrup (28) at one end of which at least one spreader bar (52) is mounted, and of the type in which a trim cap (12) is provided which covers over the blade (14) and which, to that end, exhibits an upturned-U shape, in cross section, formed by two parallel lateral flanks (24) joined together by a transverse upper back (26), characterised in that the trim cap (12) includes a main longitudinal segment (58) and at least one end longitudinal segment (50) which is mounted pivoting, about a transverse axis (A4), on the main segment (58) so that the end longitudinal segment (50) of the cap (12) faithfully follows the pivoting movements of the spreader bar (52) when the windscreen wiper (10) sweeps over the pane of glass to be wiped.

2. Windscreen wiper according to Claim 1, characterised in that the end longitudinal segment (50) includes a linking longitudinal end (64), two parallel lateral flanges (62) of which are intended to be held between the two parallel flanks (24) of a linking end (60) of the main segment (58), and in that the linking end (60) flanges (62) of the end segment (50) include two transverse spigots (66) which are directed outwards and which are intended to be held in corresponding orifices (68) formed in the flanks (24) of the main segment (58) in order to form the pivot for articulation of the end segment (50) on the main segment (58).

3. Windscreen wiper according to one of Claims 1 and 2, characterised in that the axis of pivoting (A4) of the end segment (50) on the main segment (58) corresponds substantially to the axis of articulation (A3) of the spreader bar (52) on the stirrup (28).

4. Windscreen wiper according to any one of the preceding claims, characterised in that the end segment (50) of the trim cap (12) is secured to the spreader bar (52).

5. Windscreen wiper according to any one of the preceding claims, characterised in that the end segment (50) of the trim cap (12) is mounted on the spreader bar (52) by being clipped on elastically.

6. Windscreen wiper according to any one of the preceding claims, characterised in that the spreader bar (52), at one longitudinal end, carries a secondary spreader bar (54) mounted articulated, and in that the trim cap (12) includes two successive pivoting segments the axes of pivoting of which correspond to the axes for articulation of the spreader bar and of the secondary spreader bar respectively.

7. Windscreen wiper according to any one of preceding claims, characterised in that one of the lateral flanks (24) of the trim cap (12) carries a spray bar (74), on a lower longitudinal edge, which is intended to squirt washer liquid onto the pane of glass.

8. Windscreen wiper according to Claim 7, characterised in that the spray bar (74) extends along the main segment (58).

9. Windscreen wiper according to Claim 7, characterised in that the spray bar (74) is produced from a flexible material and in that it extends along the main segment (58) and along a pivoting end segment (50).

10. Windscreen wiper according to any one of the preceding claims, characterised in that one of the lateral flanks (24) of the trim cap (12) carries an aerodynamic deflector (70).

11. Windscreen wiper according to Claim 10 taken in combination with any one of Claims 7 to 9, characterised in that the spray bar (74) is carried by the lateral flank (24) opposite that carrying the aerodynamic deflector (70).

12. Windscreen wiper according to any one of the preceding claims, characterised in that the trim cap (12) includes a series of louvres for removing the air trapped under the cap.
